# FASCICULE DE BREVET EUROPEEN

(11) **EP 0 716 912 B1**
(45) Date de publication et mention de la délivrance du brevet: **16.06.1999**
(21) Numéro de dépôt: 95420350.1
(22) Date de dépôt: 05.12.1995
(51) Int. Cl.: B29C 43/30, B29D 31/00, D06N 7/00

(54) **Matériau en feuille obtenu à partir de matières thermoplastiques**
Aus thermoplastischen Materialien hergestellte Folie
Sheet obtained from thermoplastic materials

(30) Priorité: 13.12.1994 FR 9415214
(43) Date de publication de la demande: 19.06.1996
(73) Titulaire: TARAFLEX, F-69170 Tarare (FR)
(72) Inventeur: Hinault, Robert, F-69005 Lyon (FR); Gonnu, Michel, F-69170 Tarare (FR)
(74) Mandataire: Vuillermoz, Bruno

(56) Documents cités:
- EP-A- 0 227 029
- AU-B- 596 742
- DE-C- 64 422

## Description

Il a été proposé depuis fort longtemps de réaliser des feuilles, plaques, notamment pour revêtements de sols, à partir de matières thermoplastiques.

Parmi les différentes techniques mises en oeuvre pour réaliser de tels revêtements, et plus particulièrement des revêtements de sol, il a été proposé de déposer sur un support continu, temporaire ou pouvant rester intégré au revêtement final, des granulés ou fragments en PVC par exemple, l'ensemble passant dans un tunnel de traitement proprement dit où l'on réalise une opération de chauffage et de calandrage suivie d'un refroidissement, la feuille obtenue recevant ensuite un traitement final de surface avant soit d'être enroulée sous la forme d'une bande de grande longueur, soit découpée en plaques ou dalles.

Une telle technique ressort notamment du FR-A-1 308 603 et des EP-A-046 526 et 227 029.

Un tel procédé qui présente l'avantage de permettre une production à la continue, à grande vitesse, conduit à des revêtements de sol ayant des très bonnes caractéristiques (résistance à l'usure, au poinçonnement).

Ainsi que cela ressort du FR-A-1 308 603, concernant le décor que présentent de tels produits, il est possible de jouer sur la forme des particules ou fragments de matière thermoplastique qui peuvent se présenter sous la forme de cubes, de carrés, de tubes, de tiges, d'étoiles, voire même de "spaghetti" ou de fils. En jouant sur la forme et la coloration des fragments, il est possible d'obtenir des effets jaspés ou marbrés ou, lorsque les fragments de matière thermoplastique sont constitués par des tiges, des taches colorées formant un dessin qui ressemble à une peinture obtenue en peignant avec le doigt au moyen de peintures de différentes couleurs.

Or on a trouvé, et c'est ce qui fait l'objet de la présente invention, un nouveau type de matériau en feuille obtenu à partir de fragments de matière thermoplastique sous forme de crins qui permettent d'obtenir un nouveau type d'effet coloré, dans la masse du matériau obtenu, lesdits effets combinant à la fois un aspect marbré et de couleur uniforme et de veines de différentes couleurs imbriquées les unes dans les autres.

D'une manière générale, l'invention consiste en un matériau sous forme de feuille obtenu à partir de fragments de matière thermoplastique, plus particulièrement en PVC, utilisables notamment comme revêtements de sols ou de parois, obtenu selon la technique qui consiste à déposer sur un support continu, temporaire ou destiné à être incorporée dans le produit fini, une couche régulière desdits fragments à laquelle on fait subir un traitement thermique associé à un calandrage suivi d'un refroidissement, ladite feuille présentant après réalisation des motifs imbriqués les uns dans les autres, et ce sur toute son épaisseur, ledit matériau ***se caractérisant*** en ce que :
- lesdits fragments sont des crins de diamètre compris entre 0,6 et 0,8 mm et sont coupés à une longueur comprise entre 15 à 30 mm;
- ledit calandrage est réalisé au moyen d'une calandre permettant de presser la matière en la maintenant à plat sur une grande longueur, de manière continue ;
- après conformation sous forme de feuilles, les motifs obtenus par la déformation des crins sous l'action de la pression comportent des motifs colorés d'aspect marbré uniforme, à l'intérieur desquels sont imbriquées des veines colorées.

Un tel résultat est obtenu conformément à l'invention grâce à la sélection des points suivants.

Tout d'abord, il est avantageux que le matériau soit obtenu à partir de différents variétés de crins dont l'une est présente dans une proportion de l'ordre de 33 à 80 % pour obtenir l'aspect marbré uniforme.

Par ailleurs, si le diamètre des crins est inférieur à 0,6 mm, l'aspect veiné tend à disparaître lors du pressage, et l'on obtient simplement un effet de granité ; en revanche, si le diamètre est supérieur à 0,8 mm, l'écrasement forme des plaques colorées perdant cet aspect filiforme.

De plus, l'opération de calandrage doit impérativement être faite en maintenant la matière à plat sur une grande longueur et non pas par calandrage conventionnel au moyen de cylindres, tel que cela est décrit dans le FR-A-1 308 603.

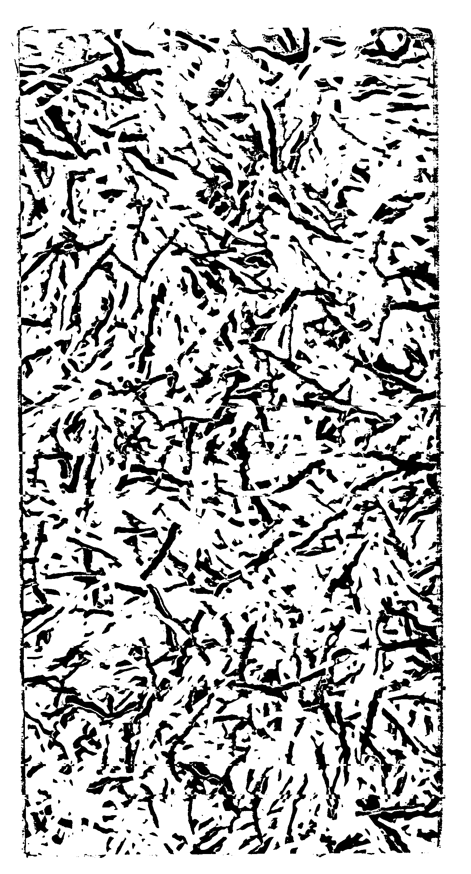

L'invention et les avantages qu'elle apporte sera cependant mieux comprise grâce à l'exemple de réalisation donné ci-après, et qui est illustré par la figure unique annexée qui est une reproduction d'un matériau réalisé conformément à l'invention.

Pour la réalisation d'un tel matériau, on procède de la manière suivante.

Dans une première phase, on extrude, de manière conventionnelle, des crins de matière thermoplastique, PVC notamment, crins que l'on coupe à froid après étirage, ces crins ayant un diamètre compris entre 0,6 et 0,8 mm.

La composition de PVC comporte dans le cas présent, trois types de crins de coloris blanc, gris clair et noir ayant un diamètre de 0,6 mm et une longueur de 25 mm.

De manière connue, et comme cela ressort notamment de l'EP-A-227 129, sur une chaine de production conventionnelle comportant un tapis transporteur sur lequel est disposé un papier transfert, on distribue ces crins à raison de: >
- 625 g/m2 pour les crins de coloris blanc, soit 50 % du poids total;
- 375g/m2 pour les crins de coloris gris clair et 250 g/m2 pour ceux de coloris noir,
   de manière à ce qu'ils soient répartis sur le support de manière aléatoire en formant une couche ayant une épaisseur de 4,5 mm.

Après traitement thermique, compression et refroidissement, on obtient en sortie de chaine une feuille ayant une épaisseur de 2 mm et dont l'aspect est tel qu'il ressort de la figure annexée, et qui comporte des zones d'aspect marbré blanches, formant des taches uniformes à l'intérieur de laquelle sont imbriquées des veines grises et noires dont la largeur est d'environ deux fois la largeur des crins d'origine.

Bien entendu, l'invention n'est pas limitée à l'exemple de réalisation mais elle en couvre toutes les variantes réalisées dans le cadre défini par les revendications.

## Revendications

1. Matériau sous forme de feuille obtenu à partir de fragments de matière thermoplastique, plus particulièrement en PVC, utilisable notamment comme revêtements de sols ou de parois, obtenu selon la technique qui consiste à déposer sur un support continu, temporaire ou destiné à être incorporée dans le produit fini, une couche régulière desdits fragments à laquelle on fait subir un traitement thermique associé à un calandrage suivi d'un refroidissement, ladite feuille présentant après réalisation des motifs imbriqués les uns dans les autres, et ce sur toute son épaisseur, ***caractérisé*** en ce que :
- lesdits fragments sont des crins de diamètre compris entre 0,6 et 0,8 mm et sont coupés à une longueur comprise entre 15 à 30 mm ;
- ledit calandrage est réalisé au moyen d'une calandre permettant de presser la matière en la maintenant à plat sur une grande longueur, de manière continue;
- après conformation sous forme de feuille, les motifs obtenus par la déformation des crins sous l'action de la pression comportent des motifs colorés d'aspect marbré uniforme, à l'intérieur desquels sont imbriquées des veines colorées.

2. Matériau selon la revendication 1, caractérisé en ce qu'il est obtenu à partir de différentes variétés de crins dont l'une est présente dans une proportion de l'ordre de 33 à 80 %.

## Claims

1. Material in the form of sheet, obtained from fragments of a thermoplastic, more particularly PVC, that can especially be used as floor or wall coverings, which is obtained using the technique consisting in depositing a uniform layer of the said fragments on a continuous support, which is temporary or intended to be incorporated into the end-product, the said layer having been subjected to a heat treatment associated with a calendering operation followed by a cooling operation, the said sheet, after it has been produced, having mutually imbricated patterns over its entire thickness, characterized in that:
- the said fragments are filaments having a diameter of between 0.6 and 0.8 mm and are cut to a length of between 15 to 30 mm;
- the said calendering operation is carried out by means of a calender allowing the material to be pressed in a continuous manner while keeping it flat over a great length;
- after it has been shaped in the form of a sheet, the patterns obtained by the deformation of the filaments, due to the action of the pressure, comprise coloured patterns having a uniform marbled appearance, within which patterns coloured veins are imbricated.

2. Material -according to Claim 1, characterized in that it is obtained from different varieties of filaments, one of which is present in an amount of about 33 to 80%.

## Patentansprüche

1. Material in Form einer Folie, welches aus Fragmenten aus thermoplastischem Material, insbesondere aus PVC, hergestellt ist, insbesondere als Boden- oder Wandverkleidung verwendbar ist und nach dem Verfahren hergestellt ist, das in der Anbringung einer gleichmäßigen Schicht der genannten Fragmente auf einem vorübergehend als solcher dienenden oder zur Einarbeitung in das fertige Produkt bestimmten endlosen Träger besteht, welche Schicht einer Wärmebehandlung, verbunden mit einem Kalandriervorgang, und einer darauffolgenden Abkühlung unterzogen wird, wobei die genannte Folie nach der Herstellung über ihre gesamte Dicke einander überschneidende Motive aufweist, **dadurch gekennzeichnet**, daß:
- die genannten Fragmente Fasern mit einem Durchmesser zwischen 0,6 und 0,8 mm sind und auf eine Länge zwischen 15 und 30 mm zugeschnitten sind;
- der genannte Kalandriervorgang kontinuierlich mittels eines Kalanders ausgeführt wird, der es ermöglicht, das Material zu pressen, wobei es auf einer großen Länge flach gehalten wird;
- nach Ausbildung in Form einer Folie die Motive, welche durch Verformung der Fasern unter Einwirkung des Drucks erhalten wurden, farbige Motive von gleichförmigem marmoriertem Aussehen enthalten, mit denen sich farbige Adern überschneiden.

2. Material nach Anspruch 1, **dadurch gekennzeichnet**, daß es aus verschiedenen Arten von Fasern hergestellt ist, von denen eine mit einem Anteil von einer Größenordnung von 33 bis 80 % vorhanden ist.
